# EUROPÄISCHE PATENTSCHRIFT

(11) **EP 3 478 126 B1**
(45) Veröffentlichungstag und Bekanntmachung des Hinweises auf die Patenterteilung: **11.08.2021**
(21) Anmeldenummer: 17732448.0
(22) Anmeldetag: 26.06.2017
(51) Int. Cl.: A47B 88/969, F16B 12/40, F16B 12/44

(54) **EINTEILUNGSSYSTEM FÜR EIN BEWEGBARES MÖBELTEIL**
DIVISION SYSTEM FOR A MOVABLE FURNITURE PART
SYSTEME DE RANGEMENT POUR ELEMENT DE MEUBLE MOBILE

(30) Priorität: 30.06.2016 DE 202016103479 U
(43) Veröffentlichungstag der Anmeldung: 08.05.2019
(73) Patentinhaber: Grass GmbH, 6973 Höchst (AT)
(72) Erfinder: GRABHER, Guenter, 6972 Fußach (AT)
(74) Vertreter: Otten, Roth, Dobler & Partner mbB Patentanwälte
(86) Internationale Anmeldenummer: PCT/EP2017/065638
(87) Internationale Veröffentlichungsnummer: WO 2018/001927

(56) Entgegenhaltungen:
- WO-A1-2013/029067
- DE-U1-202009 015 649
- DE-U1-202013 102 937
- US-A- 3 282 635

## Beschreibung

Die Erfindung betrifft ein Einteilungssystem mit einem Innenwandelement für eine Schublade, sowie ein Möbel mit einem solchen Einteilungssystem.

### Stand der Technik

Bei Möbeln wie Wohn- oder Küchenmöbeln, welche bewegbare Möbelteile wie Schubladen aufweisen, in deren Innenraum Gegenstände unterbringbar sind, sind Einteilungssysteme zur Unterteilung bzw. Einteilung des Innenraums bekannt. Mit dem Einteilungssystem lässt sich der Innenraum des Möbelteils in mehrere Bereiche unterteilen, um unterschiedliche Gegenstände wie z. B. Besteckarten in jeweils dazugehörigen Bereichen sortiert unterbringen zu können. Die US 3,282,635 zeigt eine Verbindungmöglichkeit zweier Wandelemente einer Schublade. Die DE 20 2013 102 937 U1 zeigt eine Verbindungsmöglichkeit zweier Möbelprofile.

Ein bisheriges Innenwandelement eines Einteilungssystems ist derart ausgestaltet, dass eine manuelle Anpassung einer Länge des Innenwandelements durch einen Monteur notwendig ist, um das Einteilungssystem auf das jeweilige Möbelteil oder eine Unterteilung des Innenraums auf den jeweiligen, unterzubringenden Gegenstand anzupassen. Ein Einteilungssystem ist zum Beispiel aus der DE 20 2009 015649 U1 bekannt.

### Aufgabe und Vorteile der Erfindung

Der Erfindung liegt die Aufgabe zu Grunde, ein alternatives Schubladeninnenraum-Einteilungssystem für Schublade bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Innenwandelement für ein bewegbares Möbelteil, zur Anordnung in einem Innenraum einer Schublade aus. Das Innenwandelement ist innerhalb von Außenwänden der Schublade anordenbar, wobei die Außenwände der Schublade den Innenraum der Schublade begrenzen. Das Innenwandelement ist somit in einem Innenraum der Schublade anordenbar und ist von einer Außenwand der Schublade zu unterscheiden. Die Außenwände der Schublade werden durch eine Schubladenfront, eine Schubladenrückwand und gegenüberliegend zueinander angeordnete Schubladenzargen gebildet. Die Außenwände bilden vorteilhafterweise zusammen mit einem Schubladenboden einen Schubladenkasten. Der Innenraum des Schubladenkastens, welcher insbesondere durch ein Innenwandelement abtrennbar ist, bildet bevorzugterweise einen Stauraum zur Unterbringung von Gegenständen in der Schublade.

Erfindungsgemäß ist das Innenwandelement als Hohlprofil ausgebildet ist, wobei an einer offenen Seite des Hohlprofils entlang eines Randbereichs der offenen Seite eine große Seitenfläche des Hohlprofils eine Aussparung aufweist, wobei eine schmale Seitenfläche in einer Längserstreckung des Hohlprofils über die Aussparung übersteht.

Hierdurch ist eine flexible und kostengünstige Lösung eines Schubladeninnenraum-Einteilungssystem mit einem Innenwandelement realisiert.

Erfindungsgemäß besitzt das Hohlprofil zwei große Seitenwände, welche gegenüberliegend am Hohlprofil vorhanden sind, wobei eine der zwei großen Seitenwände eine große Seitenfläche umfasst. Weiterhin umfasst das Hohlprofil zwei schmale Seitenwände, welche gegenüberliegend ausgebildet sind. Eine schmale Seitenwand umfasst eine schmale Seitenfläche. Die schmale Seitenfläche und die schmale Seitenwand sind bevorzugterweise senkrecht zur großen Seitenfläche und zur großen Seitenwand ausgerichtet. Die großen Seitenwände und die schmalen Seitenwände bilden somit die Außenwände des Hohlprofils und erstrecken sich entlang der Längserstreckung des Hohlprofils.

Die offene Seite des Hohlprofils ist vorteilhafterweise an einer kurzen Schmalseite vorhanden, insbesondere sind zwei sich gegenüberliegende kurze Schmalseiten als offene Seiten ausgebildet. Die schmale Seitenfläche, die große Seitenfläche und die kurze Schmalseite sind vorteilhafterweise senkrecht zueinander angeordnet. Erfindungsgemäß umranden die zwei sich gegenüberliegend angeordnete schmale Seitenflächen und die zwei sich gegenüberliegend angeordnete große Seitenflächen des Hohlprofils die offene Seite des Hohlprofils.

Vorteilhaft erweist sich auch, dass sich die Aussparung über beispielsweise 50 %, 60 %, 70 %, 80 % oder 90 % beispielsweise über 100 % des Randbereichs der großen Seitenfläche erstreckt. Insbesondere erstreckt sich die Aussparung über insbesondere den ganzen Randbereich der großen Seitenfläche.

Beispielsweise sind die beiden sich gegenüberliegend angeordneten Endbereiche mit den offenen Seite des Innenwandelements spiegelsymmetrisch, insbesondere flächensymmetrisch zueinander ausgestaltet.

Bevorzugterweise umfasst eine große Seitenfläche des Hohlprofils an der offenen Seite entlang eines Randbereichs der offenen Seite eine Aussparung. Das Innenwandelement ist an einem Randbereich beispielsweise profiliert und/oder strukturiert.

Auch ist eine vergleichsweise leichte Kopplung von Innenwandelementen z.B. durch Einschieben oder Einstecken eines Verbindungsorgans in das Hohlprofil eines Innenwandelements und insbesondere in die Aussparung des Innenwandelements möglich.

Vorteilhafterweise bilden mehrere Innenwandelemente, insbesondere mindestens vier Innenwandelemente einen Rahmen eines Schubladeninnenraum-Einteilungssystems bzw. Schubladeninnenraum-Unterteilungssystems bzw. Schubladenstauraum-Unterteilungssystem zur Einteilung oder Unterteilung des Innenraums der Schublade. Vorteilhafterweise werden die Innenwandelemente rechtwinklig zueinander angeordnet. Beispielsweise werden mehrere Rahmen eines Einteilungssystems nebeneinander in einem Innenraum einer Schublade angeordnet. Insbesondere werden diese Rahmen durch einen weiteren Rahmen des Einteilungssystems im angeordneten Zustand an der Schublade umrahmt und dadurch vorteilhaft zusammengehalten.

Erfindungsgemäß ist vorgesehen, dass eine obere und/oder untere, lange Schmalseite des Innenwandelements am Randbereich der offenen Seite in einer Längserstreckung des Hohlprofils über die Aussparung hervorstehend ausgebildet ist.

Im angeordneten Zustand des Innenwandelements an der Schublade ist die untere, lange Schmalseite beispielsweise dazu vorgesehen am Schubladenboden anstehend oder aufliegend angeordnet zu werden, sodass sie für einen Nutzer der Schublade nicht sichtbar ist. Die der unteren, langen Schmalseite gegenüberliegend ausgebildete obere, lange Schmalseite ist hingegen im angeordneten Zustand des Innenwandelements an der Schublade für einen Nutzer der Schublade sichtbar.

Hierdurch ist die obere, lange Schmalseite des Innenwandelements derart über die Aussparung des Hohlprofils hervorstehend oder überstehend vorhanden, dass an einem Rahmen des Schubladeninnenraum-Einteilungssystems aneinander insbesondere anstehend angeordnete Innenwandelemente ein Verbindungsorgan, welches die beiden Innenwandelemente miteinander verbindet, aus einer senkrechten Sicht auf die obere, lange Schmalseite verdecken. Dadurch ist das Einteilungssystem in angeordneten Zustand für einen Nutzer ansprechend ausgebildet.

Bei einer vorteilhaften Variante eines Innenwandelements, ist eine obere und/oder untere lange Schmalseite des Innenwandelements am Randbereich der offenen Seite stufenförmig ausgestaltet.

Bevorzugterweise ist die obere, lange Schmalseite des Innenwandelements am Randbereich der offenen Seite in einer Längserstreckung des Hohlprofils über die Aussparung derart insbesondere stufenförmig hervorstehend ausgebildet, dass zwei, insbesondere identische, an einem Rahmen des Schubladeninnenraum-Einteilungssystems aneinander anstehende Innenwandelemente mit ihren oberen, langen Schmalseiten formschlüssig aneinander anstehen.

Das Innenwandelement kann an einem Randbereich der offenen Seite, insbesondere an einem Rand, welcher durch die obere und/oder untere, lange Schmalseite gebildet ist, auch wellen- oder zickzack-artig ausgebildet sein.

Hierdurch können Innenwände im angeordneten Zustand am Rahmen in unterschiedlichen Endpositionen zueinander positioniert werden. Dadurch ist eine Außengeometrie des Rahmens mit solchen Innenwandelementen vergleichsweise flexibel und kostengünstig veränderbar.

Erfindungsgemäß ist das Innenwandelement am Randbereich derart ausgestaltet, dass zwei am Randbereich gleichartig ausgebildete Innenwandelemente in zwei zueinander unterschiedlichen Endpositionen formschlüssig anstehend am Randbereich miteinander verbindbar sind.

Hierdurch ist das Innenwandelement derart ausgestaltet, dass eine Außengeometrie eines Rahmens des Schubladeninnenraum-Einteilungssystem variabel ausbildbar ist. Der Rahmen kann unter Verwendung von vier identischen Innenwandelementen dadurch beispielsweise quadratisch oder rechteckig, mit zwei zueinander unterschiedlichen Seitenlängen ausbildbar sein.

Vorteilhafterweise sind zwei zueinander insbesondere winklig angeordnete Innenwandelemente entlang des gesamten Rands formschlüssig miteinander verbindbar.

Auch ist es von Vorteil, dass zwei insbesondere gleichartige Innenwandelemente mittels eines Verbindungsorgans insbesondere fest miteinander verbindbar sind, wobei die Innenwandelemente das Verbindungsorgan hierzu in ihrem Inneren aufnehmen.

Insbesondere ist das Verbindungsorgan in das Innenwandelement einschiebbar und/oder einsteckbar ausgestaltet. Beispielsweise kann das Verbindungsorgan an der offenen Seite des Hohlprofils in das Innenwandelement bzw. das Hohlprofil eingesteckt werden. Dadurch kann es für einen Nutzer der Schublade unsichtbar am Rahmen angeordnet sein.

Vorteilhafterweise ist das Verbindungsorgan derart in das Innenwandelement einschiebbar, dass das Verbindungsorgan mit einem Teilbereich seiner Außenseite bündig zu einer Außenkante bzw. einem Randbereich einer ersten, großen Seitenfläche des Innenwandelements vorhanden ist. Beispielsweise ist das Verbindungsorgan derart in das Innenwandelement einschiebbar, dass ein Teilbereich seiner Außenseite insbesondere bündig an einen Randbereich der ersten, großen Seitenfläche des Innenwandelements anschließt.

In einer vorteilhaften Modifikation der Erfindung ist eine Fläche einer ersten, großen Seitenfläche des Innenwandelements vergleichsweise größer ausgestaltet, als eine Fläche einer zweiten, großen Seitenfläche des Innenwandelements, welche der ersten, großen Seitenfläche gegenüberliegend ausgebildet ist. Bevorzugterweise ist eine Außenfläche einer ersten, großen Seitenfläche und/oder ersten, großen Seitenwand vergleichsweise größer ausgestaltet, als eine Außenfläche einer zweiten, großen Seitenfläche und/oder zweiten, großen Seitenwand des Innenwandelements.

Hierdurch ist es vorteilhaft möglich, dass ein Verbindungsorgan derart ausgestaltet ist, dass das Verbindungsorgan mit einem Teilbereich seiner Außenseite an zwei insbesondere rechtwinklig zueinander angeordneten Innenwandelementen bündig zu einer Außenkante einer ersten, großen Seitenfläche des ersten Innenwandelements vorhanden ist, und der Teilbereich der Außenseite des Verbindungsorgans an einen Randbereich der ersten, großen Seitenfläche eines zweiten Innenwandelements anschließend vorhanden ist. Bevorzugterweise ist in einer solchen Anordnung eine Außenkante oder ein Randbereich der zweiten, großen Seitenfläche des ersten Innenwandelements in eine Aussparung des zweiten Innenwandelements eingeschoben.

In einer vorteilhaften Variante der Erfindung ist eine Länge der Fläche der zweiten, großen Seitenfläche oder zweiten, großen Seitenwand des Innenwandelements um eine Breite, insbesondere um eine doppelte Breite einer schmalen Seitenfläche oder schmalen Seitenwand des Innenwandelements kürzer, als eine Länge der Fläche der ersten, großen Seitenfläche oder ersten, großen Seitenwand des Innenwandelements.

Dadurch können zwei Innenwandelemente am Rahmen in zwei unterschiedlichen Endpositionen zueinander angeordnet werden. Insbesondere befinden sich alle Innenwandelemente im angeordneten Zustand am Rahmen in einer Endposition.

Vorteilhafterweise ist die erste, große Seitenfläche des Innenwandelements im angeordneten Zustand am Rahmen außenliegend und die zweite, große Seitenfläche innenliegend angeordnet. Die zweite, große Seitenfläche begrenzt somit einen Innenraum des Rahmens. Die Länge der großen Seitenflächen und eine Länge der schmalen Seitenfläche erstreckt sich vorteilhafterweise parallel zur Längserstreckung bzw. zu einer Längsachse des Innenwandelements.

Als vorteilhaft erweist sich auch, dass das Innenwandelement aus Metall ausgebildet ist, insbesondere aus Stahl oder Aluminium.

Denkbar ist auch, dass das Innenwandelement aus Kunststoff, Holz oder Glas oder eine Kombination der genannten Materialien hergestellt ist.

Erfindungsgemäß weist das Verbindungsorgan an einer Außenfläche eine Stufe auf und ist derart ausgebildet, dass es in eine Aussparung mindestens eines der Innenwandelemente eingreifend anordenbar ist.

Das Verbindungsorgan kann aus Metall, Holz, Kunststoff oder einer Kombination der Materialien ausgestaltet sein.

Vorteilhaft erweist sich auch, dass das Verbindungsorgan für unterschiedliche Einsteckrichtungen unterschiedlich ausgestaltete Einsteckabschnitte aufweist.

Beispielsweise ist das Verbindungsorgan L-förmig ausgebildet, und das Verbindungsorgan umfasst genau zwei Einsteckabschnitte, wobei jeweils ein Einsteckabschnitt eine Seite des L's bildet. Bevorzugterweise weist eine Außenfläche eines Einsteckabschnitts die Stufe auf, insbesondere ist die Stufe von der Außenfläche erhaben oder abstehend ausgebildet. Denkbar ist, dass die Stufe im Eckbereich des L's vorhanden ist.

In einer weiteren vorteilhaften Modifikation umfasst das Verbindungsorgan ein Dämpfungsorgan, welches insbesondere an der Stufe ausgebildet ist. Vorteilhafterweise bildet das Dämpfungsorgan die Stufe. Beispielsweise ist das Dämpfungsorgan derart abstehend an einem ersten Einsteckabschnitt des Verbindungsorgans vorhanden, dass es über eine Außenfläche des winklig zum ersten Einsteckabschnitt, am ersten Einsteckabschnitt angeordneten zweiten Einsteckabschnitt abstehend vorhanden ist.

In einer bevorzugten Ausbildung umfasst das Dämpfungsorgan ein Distanzhalteelement. Vorteilhafterweise bildet das Distanzhaltelement die Stufe. Beispielsweise ist das Distanzhalteelement derart abstehend an einem ersten Einsteckabschnitt des Verbindungsorgans vorhanden, dass es über eine Außenfläche des winklig zum ersten Einsteckabschnitt, am ersten Einsteckabschnitt angeordneten zweiten Einsteckabschnitt abstehend vorhanden ist.

Erfindungsgemäß sind ein Innenwandelement und ein Verbindungsorgan Bestandteile eines Einteilungssystems.

Bevorzugterweise ist das Verbindungsorgan derart ausgestaltet, dass Einsteckabschnitte des Verbindungsorgans beim Zusammenfügen wechselseitig zu einem Innenwandelement, insbesondere in eine Endposition am Innenwandelement, zuordenbar ausgestaltet sind.

Vorteilhafterweise sind zwei insbesondere identische oder gleichartige Innenwandelemente mit einem Verbindungsorgan derart verbindbar, dass sich die Innenwandelemente in unterschiedlichen Endpositionen am Rahmen zueinander anordnen lassen, wobei in den unterschiedlichen Endpositionen jeweils unterschiedliche Randbereiche der Innenwandelemente aufeinander treffen.

Auch ist es von Vorteil, dass das Verbindungsorgan derart ausgestaltet ist, dass ein Distanzhalteelement im angeordneten Zustand des Verbindungsorgans an einer Endposition an zwei Innenwandelementen über eine Seitenfläche eines Innenwandelements nach außen übersteht.

Das Distanzhalteelement kann im angeordneten Zustand in einer Endposition an einer Innenwand über eine untere Schmalseite, insbesondere über eine schmale Seitenwand und/oder über eine große Seitenfläche einer Innenwand nach außen überstehend vorhanden sein.

Das Distanzhalteelement ist beispielsweise dazu vorgesehen, im angeordneten Zustand des Verbindungsorgans am Rahmen eine Distanz zwischen einer unteren Schmalseite des Innenwandelements und dem Schubladenboden zu realisieren. Hierdurch ist der Schubladenboden gegenüber einem Verkratzen durch das Innenwandelement geschützt.

Des Weiteren ist es denkbar, dass das Distanzhalteelement derart dämpfend ausgestaltet ist, dass im angeordneten Zustand des Rahmens an der Schublade, insbesondere bei einer Bewegung der Schublade, ein Geräusch, beispielsweise ein Klappern oder Klacken aufgrund des Aneinanderschlagens des Rahmens mit den Schubladenboden gedämpft ist, insbesondere nicht entsteht. Das Distanzhalteelement kann aus Kunststoff, Moosgummi, oder einem anderen vergleichsweise weichen Material ausgestaltet sein.

Überdies ist es vorteilhaft, dass das Dämpfungsorgan ein Dämpfungselement umfasst, z.B. in Form einer Feder. Das Dämpfungselement steht vorteilhafterweise im angeordneten Zustand des Verbindungsorgans am Innenwandelement in der Endposition über eine große Seitenfläche, insbesondere über die erste, große Seitenfläche beispielsweise nach außen über.

Das Dämpfungselement ist beispielsweise federnd ausgestaltet und bevorzugterweise dazu vorgesehen im angeordneten Zustand des Verbindungsorgans am Rahmen, zwei in eine Schublade eingesetzte, zueinander benachbarte, aneinander anliegende Rahmen dämpfend und/oder federnd gegeneinander abzustützen. Hierdurch ist zum einen ein Geräusch, welches aufgrund eines Aneinanderschlagens oder eines Aneinanderreibens der Rahmen entsteht, vermieden. Zum anderen sind eventuelle Dimensionstoleranzen des Schubladeninnenraums und der Innenwandelemente bzw. der Rahmen durch die federnde Wirkung der Dämpfungselemente ausgleichbar.

Vorteilhafterweise besitzt das Verbindungsorgan ein Distanzhalteelement, welches im angeordneten Zustand des Verbindungsorgans am Innenwandelement über eine große Seitenfläche, insbesondere über die große Seitenfläche der ersten, großen Seitenwand, überstehend anordenbar ist.

Bevorzugterweise steht das Dämpfungselement über das Distanzhalteelement hervor, insbesondere, wenn das Dämpfungsorgan ein Dämpfungselement und ein Distanzhalteelement aufweist. Insbesondere steht das Dämpfungselement im angeordneten Zustand des Verbindungsorgans am Innenwandelement weiter über eine große Seitenfläche hervor, insbesondere über die erste, große Seitenfläche der ersten, großen Seitenwand, als das Distanzhalteelement.

Weiter wird vorgeschlagen, dass das Verbindungsorgan dazu ausgestaltet ist und derart an zwei Innenwandelemente anordenbar ist, dass die beiden über das Verbindungsorgan verbundene Innenwandelemente in, insbesondere genau, zwei unterschiedlichen Endpositionen zueinander bringbar sind.

Des Weiteren ist es vorteilhaft, dass zwei Innenwandelemente des Einteilungssystems und ein Verbindungsorgan des Einteilungssystems derart ausgestaltet sind, sodass sie insbesondere fest miteinander verbindbar sind, wobei das Verbindungsorgan im verbundenen Zustand mit den Innenwandelementen im Inneren der beiden Innenwandelemente bzw. im Inneren der Hohlprofile zumindest im Wesentlichen aufgenommen ist. Dadurch ist das Verbindungsorgan beispielsweise für einen Nutzer der Schublade unsichtbar anordenbar.

Erfindungsgemäß ist das Innenwandelement Bestandteil des Einteilungssystems, wobei Bestandteile des Einsteilungssystems bevorzugterweise ein Rastermaß besitzen.

Innenwandelemente des Einteilungssystems besitzen vorteilhafterweise unterschiedliche Längen, wobei die Längenunterschiede dem Rastermaß des Einteilungssystems entsprechen. Beispielsweise umfasst das Einteilungssystem Innenwandelemente mit genau zwei, drei, vier, fünf oder genau sechs unterschiedlichen Längen, insbesondere entsprechend dem Rastermaß des Einteilungssystems. Hierbei sind die unterschiedlichen Innenwandelemente vorteilhafterweise identisch ausgebildet und unterscheiden sich ausschließlich in ihren Längen.

In einer vorteilhaften Variante der Erfindung umfasst ein Einteilungssystem ein Verbindungsorgan und ein Innenwandelement, welches derart ausgestaltet ist, dass ein Teilbereich einer Außenseite des Verbindungsorgans, insbesondere eine Teilfläche der Außenseite, im angeordneten Zustand des Verbindungsorgans in einer Endposition an zwei Innenwandelementen anschließend an eine insbesondere erste, große Seitenfläche eines ersten Innenwandelements und anschließend an eine insbesondere erste, großen Seitenfläche eines zweiten Innenwandelements ausgebildet ist. Der Teilbereich ist beispielsweise zwischen den beiden großen Seitenflächen der beiden Innenwandelemente angeordnet.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert:
- Figur 1: eine perspektivische Ansicht auf ein erfindungsgemäßes Möbelteil mit einer Schublade in einen geöffneten Zustand,
- Figur 2: eine perspektivische Ansicht von schräg oben auf ein erfindungsgemäßes Einteilungssystem, welches in einer Schublade nach Figur 1 angeordnet ist,
- Figuren 3 bis 6: unterschiedliche Ansichten auf Komponenten einer Variante eines Einteilungssystems,
- Figuren 7 und 8: eine Schnittansicht, aus Richtung einer Draufsicht auf eine schmale Seitenfläche, auf zwei Innenwandelemente, welche durch ein Verbindungsorgan miteinander verbunden sind,
- Figuren 9 bis 11: jeweils eine Draufsicht auf eine schmale Seitenfläche von zwei Innenwandelementen, welche in unterschiedlichen Endpositionen zueinander angeordnet sind,
- Figuren 12 und 13: jeweils eine perspektivische Ansicht auf zwei Innenwandelemente im angeordneten Zustand,
- Figuren 14 und 15: eine perspektivische Ansicht auf zwei Innenwandelemente, welche durch jeweils eine Variante eines Verbindungsorgans verbunden sind,
- Figur 16: eine Draufsicht auf eine große Seitenfläche einer weiteren Variante eines Innenwandelements,
- Figur 17: eine perspektivische Ansicht auf einen Endbereich des Innenwandelements nach Figur 16 und
- Figur 18: eine Draufsicht auf eine Schmalseite unterschiedlich dimensionierter Innenwandelemente im angeordneten Zustand am Rahmen.

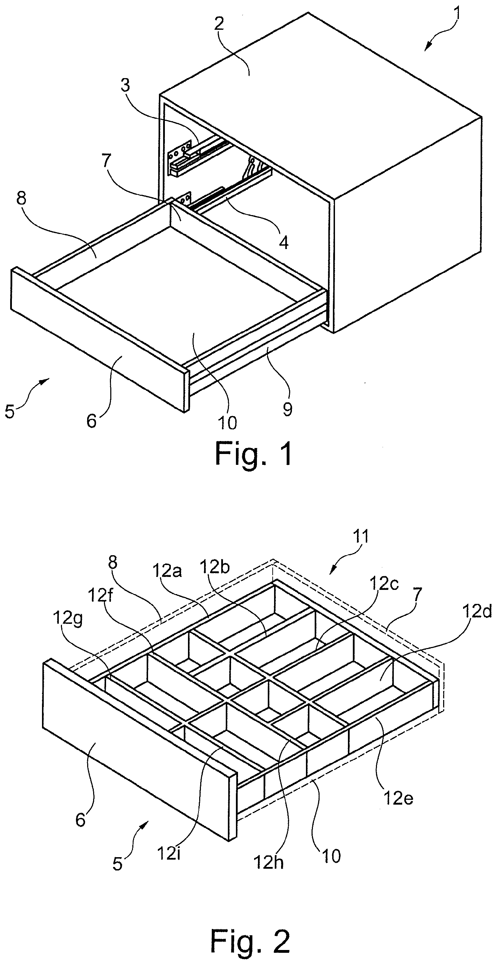

Ein erfindungsgemäßes Möbel 1 umfasst einen Möbelkorpus 2 und eine mittels Auszügen 3, 4 verschiebbar am Möbelkorpus 2 angeordnete Schublade 5 (Figur 1). Die Schublade 5 besteht aus einer Frontwand 6, eine Rückwand 7 und zwei Seitenwänden 8, 9, welche zusammen Außenwände der Schublade 5 bilden. Darüber hinaus umfasst die Schublade 5 einen Schubladenboden 10.

In Figur 2 ist ein erfindungsgemäßes Schubladeinnenraum-Einteilungssystem 11 im angeordneten Zustand an der Schublade 5 dargestellt. Die Rückwand 7, die Seitenwände 8, 9 und der Schubladenboden 10 sind transparent dargestellt. Die Rückwand 7, die Seitenwand 8 und der Schubladenboden 10 sind jeweils durch gestrichelte Linien angedeutet. Das Einteilungssystem 11 umfasst mehrere Innenwände 12a bis 12i, wobei aus Gründen der Übersichtlichkeit nicht alle Innenwände mit einem Bezugszeichen versehen sind. Das Schubladeninnenraum-Einteilungssystem 11 kann darüber hinaus auch einen Einsatz (nicht gezeigt) zum Einsetzen zwischen die Innenwände umfassen, beispielsweise eine insbesondere rutschfeste, plattenförmige Einlage oder einen Besteckkasten, insbesondere zur Aufnahme einer einzigen Besteckart.

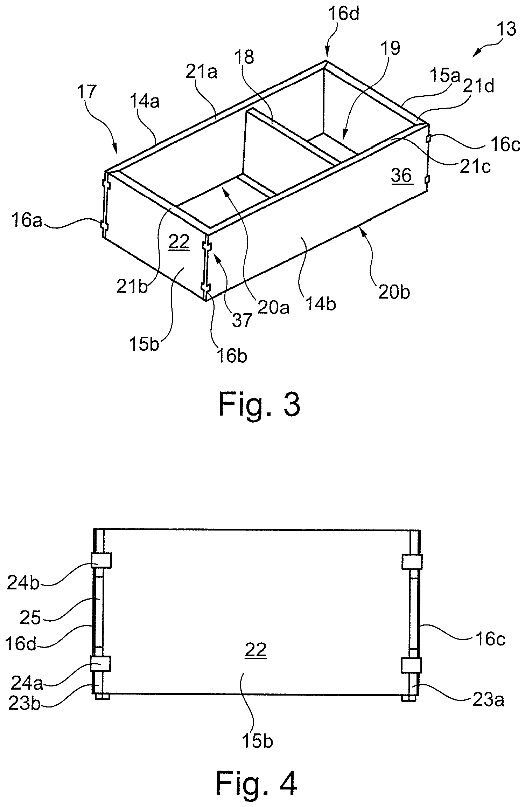

In der Figur 3 ist beispielhaft eine Variante eines Einteilungssystems 13 dargestellt. Das Einteilungssystem 13 umfasst beispielsweise zwei erste Innenwände 14a, 14b und zwei weitere, zu den ersten Innenwänden 14a, 14b insbesondere ausschließlich in der Länge unterschiedliche zweite Innenwände 15a, 15b, welche vorteilhafterweise mittels Verbindungsorganen 16a bis 16d, welche beispielsweise als Rechteckverbinder ausgeformt sind, zu einem Rahmen 17 miteinander verbunden sind.

Darüber hinaus kann das Einteilungssystem 13 eine zu den ersten und zweiten Innenwänden 14a, 14b, 15a, 15b unterschiedliche weitere Unterteilungs-Innenwand 18 umfassen, welche insbesondere zur Unterteilung eines durch den Rahmen 17 gebildeten Innenraums 19 ausgebildet ist. Die Unterteilungs-Innenwand 18 ist beispielsweise derart ausgebildet, dass sie an einer Unterseite 20a bzw. 20b der Innenwand 14a, bzw. 14b einhängbar ist.

Die Verbindungsorgane 16a bis 16d sind im zusammengesetzten Zustand am Rahmen 17 beispielsweise derart in einen Hohlraum der Innenwände 14a, 14b, 15a, 15b eingesteckt bzw. eingeschoben und die Innenwände 14a, 14b, 15a, 15b sind an ihrer oberen Schmalseite 21a bis 21d beispielsweise derart ausgebildet, dass im zusammengesetzten Zustand am Rahmen 17 und im angeordneten Zustand an der Schublade 5 vorteilhafterweise die Verbindungsorgane 16a bis 16d für einen Nutzer der Schublade nicht sichtbar sind (siehe auch Figur 2).

Im zusammengesetzten Zustand am Rahmen 17 ist bei einer Betrachtung von außen auf den Rahmen 17, z.B. auf eine große Seitenfläche 22 der Innenwand 15b, eine Teilfläche 23a, 23b der Verbindungsorgane 16c, 16d sichtbar (Figur 4). An der Teilfläche 23b ist beispielsweise ein Distanzhalteelement 24a, 24b und vorteilhafterweise ein Dämpfungselement 25 vorhanden.

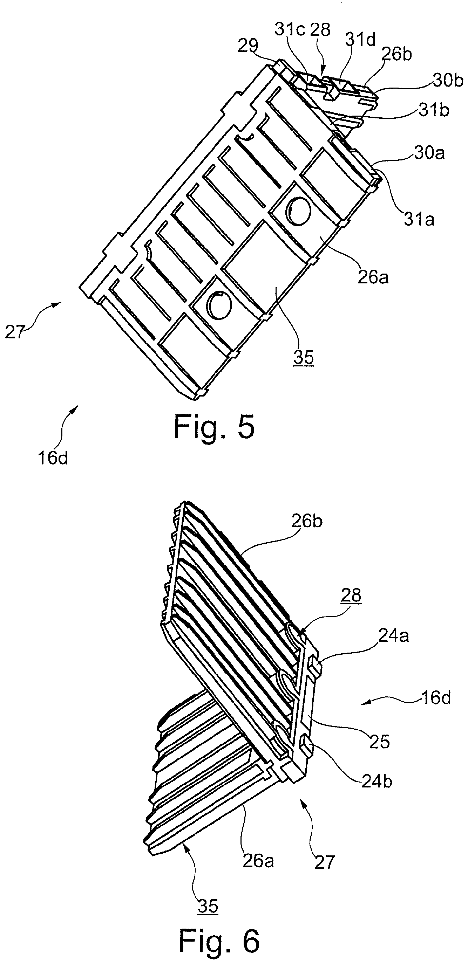

Eine Variante eines Verbindungsorgan 16 ist als Rechteckverbinder ausgestaltet und besitzt zwei Steckorgane 26a, 26b, welche plattenförmig ausgeformt sind und welche z.B. rechtwinklig zueinander stehend miteinander fest, insbesondere unlösbar verbunden sind. Vorteilhafterweise ist der Rechteckverbinder einstückig ausgestaltet (Figuren 5, 6). Des Weiteren besitzt der Rechteckverbinder an einem Verbindungsbereich 27 der beiden Steckorgane 26a, 26b von einer Oberfläche einer Seitenfläche 28 des Steckorgans 26a abstehende Distanzhalteelemente 24a, 24b. Zusätzlich kann am Verbindungsbereich 27 das Dämpfungselement 25 vorhanden sein, welches ebenfalls aus der Oberfläche der Seitenfläche 28 hervorragt und nur schematisch dargestellt ist. In einer vorteilhaften Variante sind die Distanzhalteelemente 24a, 24b und das Dämpfungselement 25 als insbesondere einstückiges Bauteil 27 ausgebildet. Das Bauteil 27 und der Rechteckverbinder können vorteilhafterweise derart ausgestaltet sein, dass das Bauteil 27 an den Rechteckverbinder ansteckbar, anklipsbar und/oder anklemmbar ist.

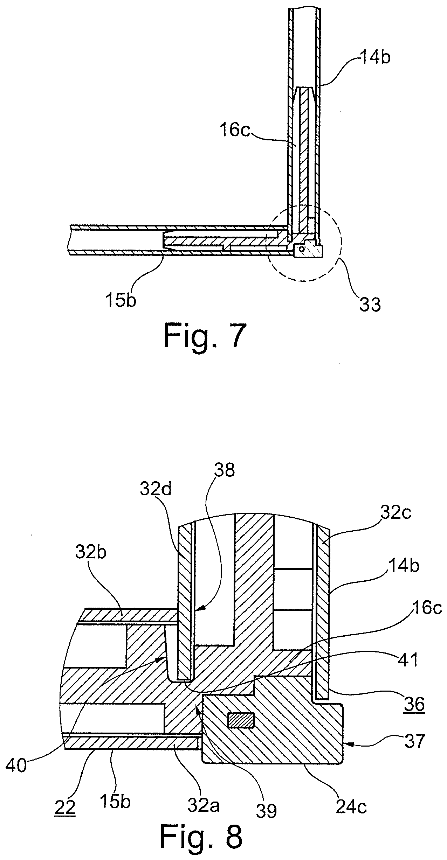

In einer bevorzugten Variante des Verbindungsorgans 16 ist ein, insbesondere sind beide Distanzhalteelement 24a, 24b und/oder das Dämpfungselement 25 derart von der Oberfläche der Seitenfläche 28 abstehend vorhanden, dass im angeordneten Zustand des Verbindungsorgan 16 am Rahmen 17 das Distanzhalteelement 24a bzw. 24b und/oder das Dämpfungselement 25 des Verbindungsorgans 16 über eine erste, große Seitenfläche 22 hervorsteht. Das Distanzhalteelement 24a bzw. 24b kann außerdem derart ausgebildet sein, dass es von einer Oberfläche der Seitenfläche 35 des Steckorgans 26a abstehend vorhanden ist, wobei die Seitenfläche 35 zur Seitenfläche 28 vorteilhafterweise rechtwinklig vorhanden ist. Dadurch ist es auch vorstellbar, dass im angeordneten Zustand des Verbindungsorgans 16 am Rahmen 17 ein Distanzhalteelement 24a bzw. 24b über eine erste, große Seitenfläche 36 der Innenwand 14b hervorsteht, wobei die erste, große Seitenfläche 36 der Innenwand 14b zur ersten, großen Seitenfläche 22 der Innenwand 15b insbesondere senkrecht angeordnet ist (siehe auch Figur 8) .

Das Distanzhalteelement 24a bzw. 24b kann dabei im angeordneten Zustand des Verbindungsorgans 16 am Rahmen 17 in eine Aussparung 37 einer großen Seitenwand 32c der Innenwand 14b eingreifen. Das Distanzhalteelement 24a bzw. 24b kann in die Aussparung 37 eingeschoben sein. Denkbar ist auch, dass das Distanzhalteelement 24a bzw. 24b die Seitenwand 32c beispielsweise klammernd umgreift. In diesem Fall ist vorteilhaft an der Seitenwand 32c keine Aussparung 37 vorgesehen. Auch ist es denkbar, dass das Distanzhalteelement 24a bzw. 24b zweigeteilt ausgebildet ist und ein erster Teil des Distanzhalteelements 24a bzw. 24b am Verbindungsorgan 16 vorhanden ist und ein zweiter, insbesondere vom ersten unabhängiger Teil des Distanzhalteelements 24a bzw. 24b an der Seitenwand 32c abstehend von der Seitenfläche 36 vorhanden ist. Beispielsweise ist der zweite Teil des Distanzhalteelements 24a bzw. 24b auf die Seitenfläche 36 aufgeklebt.

Darüber hinaus kann das Verbindungsorgan 16 und/oder das Bauteil 27 ein weiteres Distanzhalteelement 29 aufweisen, welches von einer Schmalseite 30a, 30b der Steckorgane 26a, 26b abstehend vorhanden ist. In einer vorteilhaften Variante des Verbindungsorgans 16 ist das Distanzhalteelement 29 derart abstehend am Verbindungsorgan 16 vorhanden, dass es im angeordneten Zustand des Verbindungsorgans 16 am Rahmen 17 über eine insbesondere untere Schmalseite der Innenwände (bspw. Unterseite 20a und/oder 20b) hervorsteht. Das Distanzhalteelement 29 des Verbindungsorgans 16 dient im angeordneten Zustand des Rahmens 17 an der Schublade 5 vorteilhafterweise zur Auflage des Rahmens 17 am Schubladenboden 10.

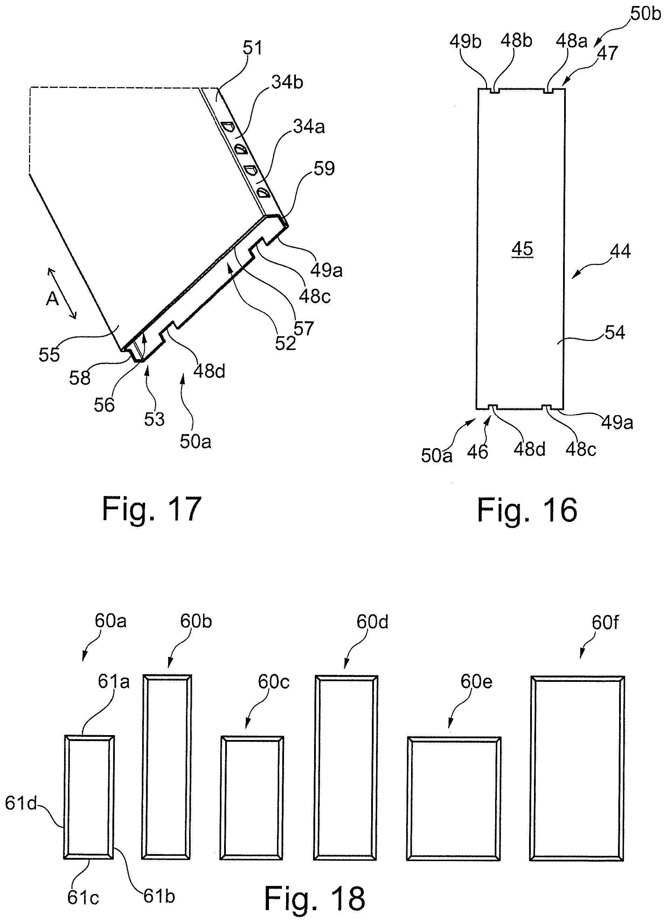

An den Schmalseiten 30a, 30b der Steckorgane 26a, 26b sind beispielsweise insbesondere rechteckige Vertiefungen 31a bis 31d ausgebildet, welche dazu vorgesehen sind, im angeordneten Zustand an der Innenwand, die Innenwand mit dem Verbindungsorgan 16 fest, insbesondere unlösbar zu verbinden. Hierzu wird beispielsweise durch einen Monteur im eingesteckten Zustand des Verbindungsorgans 16 an der Innenwand ein Halteelement 34 der Innenwand, welches vorteilhafterweise an einer Unterseite der Innenwand vorhanden ist, in die Vertiefung 31a bis 31d eingebogen bzw. eingedrückt (siehe hierzu auch Figur 17).

In den Figuren 7, 8 ist ein Verbindungsbereich der Innenwand 14b mit der Innenwand 15b in einem Ausschnitt dargestellt, wobei der Ausschnitt einen Schnitt entlang der Längsachse A durch die Innenwände 14b, 15b und das zugehörige Verbindungsorgan 16c aus einer Sichtrichtung von oben auf die Schmalseiten 21b, 21c zeigt. Wobei die Figur 8 eine Vergrößerung des Eckbereichs 33 aus Figur 7 darstellt. Die Innenwände 14b, 15b sind vorteilhaft als Hohlprofile ausgebildet und befinden sich in einer Endposition am Verbindungsorgan 16c. Ein Hohlprofil besitzt eine äußere, erste große Seitenwand 32a mit einer Seitenfläche 22 bzw. Seitenwand 32c und eine, der ersten, großen Seitenwand 32a gegenüberliegend vorhandene innere, zweite, große Seitenwand 32b bzw. 32d.

Gezeigt ist, dass die Seitenwand 32b der Innenwand 15b bzw. die Seitenwand 32d der Innenwand 14b eine Aussparung 38, 39 bezüglich der gegenüberliegenden Seitenwand 32a bzw. 32c aufweist. Die Aussparung 38, 39 ist beispielsweise dergestalt, dass die Seitenwand 32b bzw. 32d bezüglich der Seitenwand 32a, 32c in Längsrichtung betrachtet zurückversetzt ausgestaltet ist. Des Weiteren ist gezeigt, dass das Verbindungsorgan 16c einen Schlitz 40 aufweisen kann, wodurch im zusammengesetzten Zustand der Innenwände 14b, 15b mit dem Verbindungsorgan 16c die Seitenwand 32d der Innenwand 14b in Richtung Seitenwand 32a der Innenwand 15b an der Innenwand 32b vorbei in den Schlitz 40 einschiebbar ist. In diesem Fall überdeckt die äußere Seitenwand 32a einen Rand 41 der Seitenwand 32d, im angeordneten Zustand der Seitenwände 14b, 15b aneinander in der Endposition (Figuren 7, 8).

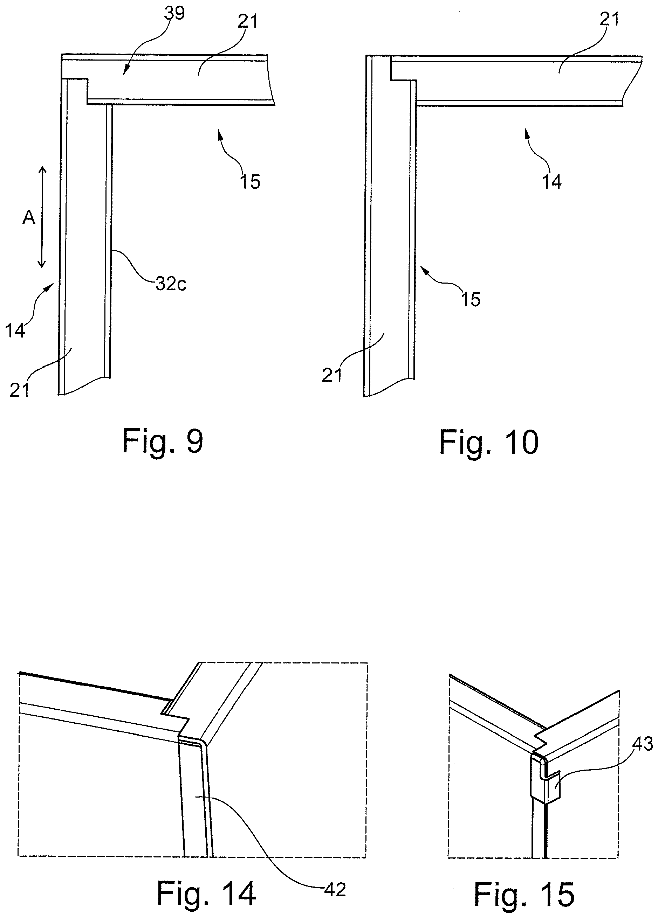

Die Figuren 9 bis 11 zeigen eine Draufsicht auf die Schmalseiten 21 von Varianten der Innenwände 14, 15 im angeordneten Zustand der Innenwände 14, 15 aneinander. Nicht angeordnet ist in diesem Fall ein Verbindungsorgan. Zu erkennen ist, dass die Innenwände vorteilhafterweise derart ausgebildet sind, dass sie insbesondere in genau zwei unterschiedlichen Endpositionen zueinander an einem Rahmen aneinander anordenbar sind. Weiter gezeigt ist, dass die Schmalseite 21 über die Aussparung 39 der Seitenwand 32c in einer Längserstreckung A übersteht, bzw. über die Aussparung 39 hervorstehend ausgebildet ist. Die Innenwand 15 ist vorteilhafterweise äquivalent, insbesondere identisch zur Innenwand 14 ausgebildet. Vorteilhafterweise unterscheiden sich die Innenwände 14, 15 ausschließlich in ihrer Länge entlang der Längserstreckung A.

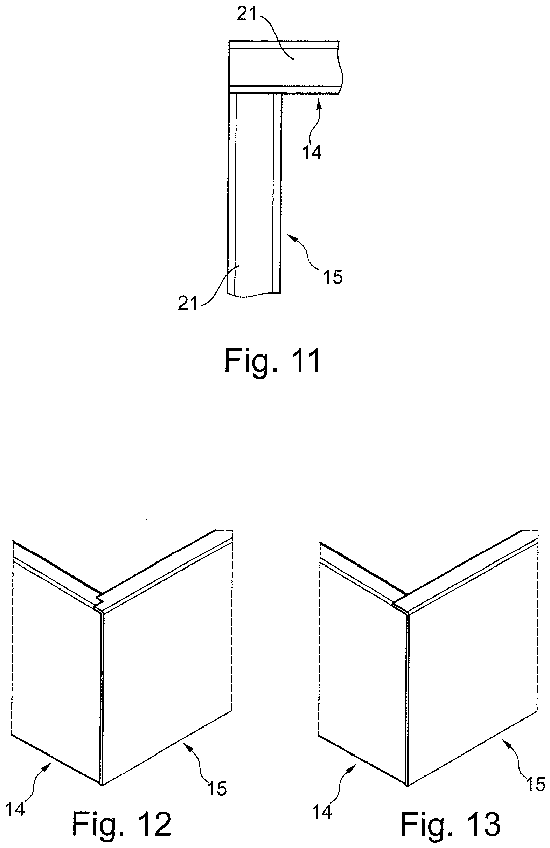

Die Figuren 12 und 13 zeigen weitere Varianten von Innenwänden 14, 15. Vorstellbar ist, die Innenwände derart auszubilden, dass ein Verbindungsorgan für einen Nutzer eines durch die Innenwände 14, 15 gebildeten Rahmens verborgen ist. In diesem Fall unterscheiden sich gegenüberliegende offene Schmalseiten einer Innenwand beispielsweise voneinander.

Den Figuren 14 und 15 können weitere Varianten eines Verbindungsorgans entnommen werden. Ein denkbares Verbindungsorgan umfasst ein Distanzhalteelement 42 (Figur 14), welches leistenartig ausgebildet ist, und im angeordneten Zustand vorteilhafterweise flächig an eine große Seitenfläche einer Innenwand anschließt, insbesondere an der großen Seitenfläche hervorstehend anschließt. Eine weitere Variante eines Verbindungsorgans umfasst ein Distanzhalteelement 43 (Figur 15), welches auf eine Seitenwand der Innenwand aufsteckbar bzw. aufklipsbar ist.

In Figur 16 ist eine weitere Variante einer Innenwand 44 in einer Draufsicht auf eine große Seitenfläche 45 einer Seitenwand 54 gezeigt. An der Seitenwand 54 ist im Randbereich 46, 47 an einem Rand 49a, 49b eines Endes 50a, 50b der Innenwand 44 eine Aussparung 48a bis 48d vorhanden. Welche vorteilhafterweise dazu ausgebildet ist, ein Distanzhaltelement eines Verbindungsorgans aufzunehmen.

Figur 17 zeigt eine perspektivische Darstellung eines Endes 50a der Innenwand 44 aus Figur 16. Gezeigt sind an einer unteren, schmalen Seitenwand 51 Halteelemente 34a, 34b. Die Halteelemente 34a, 34b sind in einer vorteilhaften Weise derart ausgestaltet, dass sie im angeordneten Zustand eines Verbindungsorgans in eine Vertiefung des Verbindungsorgans eingebogen werden können. Die Halteelemente 34a, 34b sind in Richtung eines Innenraums 52 der Innenwand 44, insbesondere senkrecht zu der Längsachse A der Innenwand 44 einbiegbar und/oder eindrückbar vorhanden.

Am Ende 50a umfasst die Innenwand 44 eine offene Schmalseite 53. Die offene Schmalseite 53 ermöglicht es, ein Verbindungsorgan im angeordneten Zustand am Einteilungssystem in den Innenraum 52 einzustecken. Die der Seitenwand 54 gegenüberliegend ausgebildete Seitenwand 55 besitzt vorteilhafterweise eine Aussparung 56, welche sich insbesondere über die gesamte Höhe der Seitenwand 55 erstreckt. Hierdurch ist ein Rand 57 der Seitenwand 55 gegenüber dem Rand 49a der Seitenwand 54 zurückversetzt an der Innenwand 44 vorhanden. Eine obere, schmale Seitenwand 58 ist vorteilhafterweise stufenförmig ausgeformt und überragt die Aussparung 56 der Seitenwand 55 in Richtung der Längsachse A der Innenwand 44 vorteilhaft. Die untere, schmale Seitenwand 51 kann äquivalent zur oberen, schmalen Seitenwand 58 über die Aussparung 56 hervorstehen. Vorstellbar ist allerdings auch, dass die untere, schmale Seitenwand 51 ebenfalls eine Aussparung 59 umfasst. Vorteilhafterweise erstreckt sich die Aussparung 59 entlang der gesamten Breite der schmalen Seitenwand 58 bzw. der Innenwand 44.

Die untere, schmale Seitenwand 51 ist im angeordneten Zustand der Innenwand 44 an einer Schublade vorteilhafterweise einem Schubladenboden gegenüberliegend angeordnet. Die der unteren, schmalen Seitenwand 51 gegenüberliegend ausgebildete obere, schmale Seitenwand 58 bildet im angeordneten Zustand der Innenwand 44 an der Schublade vorteilhafterweise eine Oberseite und ist für einen Nutzer der Schublade sichtbar.

Figur 18 zeigt Varianten von Rahmen 60a bis 60f eines Einteilungssystems. Das Einteilungssystem ist bevorzugterweise derart ausgestaltet, dass Innenwände 61a bis 61d des Einteilungssystems bis auf ihre Länge entlang einer Längsachse der Innenwände identisch ausgebildet sind. Die Länge ist hierbei vorteilhaft in einem Raster ausgebildet. Die Länge der Innenwand 61a - 61d des Einteilungssystems ist z.B. 50 mm, 100 mm, 150 mm, 200 mm, 300 mm oder 400mm. Die Länge der Innenwand 61a - 61d ist hierbei die Länge einer längsten großen Seitenwand der Innenwand 61a - 61d. Aufgrund der Ausgestaltung der Innenwände 61a bis 61d derart, dass die Innenwände 61a bis 61d sich in mindestens zwei unterschiedlichen Endpositionen zueinander anordnen lassen, sind damit beispielsweise mindestens 42 unterschiedliche Geometrien eines Rahmens 60a - 60f des Einteilungssystems bei sechs unterschiedlichen Innenwandlängen ausformbar.

### Bezugszeichenliste

| | | | |
|---|---|---|---|
| 1 | Möbel | 27 | Bauteil |
| 2 | Möbelkorpus | 28 | Seitenfläche |
| 3 | Auszug | 29 | Distanzhalteelement |
| 4 | Auszug | 30a - 30b | Schmalseite |
| 5 | Schublade | 31a - 31d | Vertiefung |
| 6 | Frontwand | 32a - 32d | Seitenwand |
| 7 | Rückwand | 33 | Eckbereich |
| 8 | Seitenwand | 34a - 34b | Halteelement |
| 9 | Seitenwand | 35 | Seitenfläche |
| 10 | Schubladenboden | 36 | Seitenfläche |
| 11 | Einteilungssystem | 37 - 39 | Aussparung |
| 12a - 12i | Innenwand | 40 | Schlitz |
| 13 | Einteilungssystem | 41 | Rand |
| 14 | Innenwand | 42 | Distanzhalteelement |
| 14a - 14b | Innenwand | 43 | Distanzhalteelement |
| 15 | Innenwand | 44 | Innenwand |
| 15a - 15b | Innenwand | 45 | Seitenfläche |
| 16 | Verbindungsorgan | 46 - 47 | Randbereich |
| 16a - 16d | Verbindungsorgan | 48a - 48d | Aussparung |
| 17 | Rahmen | 49a - 49b | Rand |
| 18 | Innenwand | 50a - 50b | Ende |
| 19 | Innenraum | 51 | Seitenwand |
| 20a - 20b | Unterseite | 52 | Innenraum |
| 21 | Schmalseite | 53 | Schmalseite |
| 21a - 21d | Schmalseite | 54 - 55 | Seitenwand |
| 22 | Seitenfläche | 56 | Aussparung |
| 23a - 23b | Teilfläche | 57 | Rand |
| 24a - 24b | Distanzhalteelement | 58 | Seitenwand |
| 25 | Dämpfungselement | 59 | Aussparung |
| 26 | Steckorgan | 60a - 60f | Rahmen |
| 26a - 26b | Steckorgan | 61a - 61d | Innenwand |

## Patentansprüche

1. Einteilungssystem (17) für eine Schublade, mit einem Innenwandelement (12a-12i, 14, 14a, 14b, 15, 15a, 15b, 44, 61a-61d) und mit einem Verbindungsorgan (16, 16a- 16d) zum Verbinden zweier der Innenwandelemente (12a-12i, 14, 14a, 14b, 15, 15a, 15b, 44, 61a-61d), zur Anordnung in einem Innenraum (19, 52) einer Schublade (5), wobei das Innenwandelement (12a-12i, 14, 14a, 14b, 15, 15a, 15b, 44, 61a-61d) als ein Hohlprofil ausgebildet ist, wobei das Hohlprofil zwei große Seitenwände besitzt, wobei die zwei großen Seitenwände gegenüberliegend am Hohlprofil vorhanden sind, wobei eine der zwei großen Seitenwände eine große Seitenfläche (22, 36, 45) umfasst, wobei das Hohlprofil zwei schmale Seitenwände umfasst, wobei die zwei schmalen Seitenwände gegenüberliegend ausgebildet sind, wobei eine der zwei schmalen Seitenwände eine schmale Seitenfläche (21, 58) umfasst, wobei die großen Seitenwände und die schmalen Seitenwände Außenwände des Hohlprofils bilden und sich entlang einer Längserstreckung des Hohlprofils erstrecken, wobei die zwei schmalen Seitenfläche und die zwei großen Seitenflächen eine offene Seite (50a, 50b) des Hohlprofils umranden, wobei an der offenen Seite (50a, 50b) des Hohlprofils entlang eines Randbereichs (49a, 49b) der offenen Seite (50a, 50b) die große Seitenfläche (22, 36, 45) des Hohlprofils eine Aussparung (48a-48d) aufweist, wobei die schmale Seitenfläche (21, 58) in einer Längserstreckung des Hohlprofils über die Aussparung (48a-48d) übersteht, **dadurch gekennzeichnet, dass** das Innenwandelement (12a-12i, 14, 14a, 14b, 15, 15a, 15b, 44, 61a-61d) am Randbereich (49a, 49b) derart ausgestaltet ist, dass das Innenwandelement (12a-12i, 14, 14a, 14b, 15, 15a, 15b, 44, 61a-61d) mit einem am Randbereich (49a, 49b) gleichartig ausgebildeten weiteren Innenwandelement (12a-12i, 14, 14a, 14b, 15, 15a, 15b, 44, 61a-61d) in zwei zueinander unterschiedlichen Positionen formschlüssig anstehend am Randbereich (49a, 49b) verbindbar ist, und dass das Verbindungsorgan (16, 16a- 16d) an einer Außenfläche eine Stufe (27, 40) aufweist und derart ausgebildet ist, dass es in eine Aussparung (48a-48d) mindestens eines der Innenwandelemente (12a-12i, 14, 14a, 14b, 15, 15a, 15b, 44, 61a-61d) des Einteilungssystems (17) eingreifend anordenbar ist.

2. Einteilungssystem (17) nach dem Anspruch 1, **dadurch gekennzeichnet, dass** das Innenwandelement (12a-12i, 14, 14a, 14b, 15, 15a, 15b, 44, 61a-61d) als ein Hohlprofil ausgebildet ist, wobei an einer offenen Seite (50a, 50b) des Hohlprofils entlang eines Randbereichs (49a, 49b) der offenen Seite (50a, 50b) eine obere und/oder untere lange Schmalseite (21, 58) des Innenwandelements (12a-12i, 14, 14a, 14b, 15, 15a, 15b, 44, 61a-61d) am Randbereich (49a, 49b) der offenen Seite (50a, 50b) stufenförmig ausgestaltet ist.

3. Einteilungssystem (17) nach einem der vorangegangenen Ansprüche, **dadurch gekennzeichnet, dass** eine obere und/oder untere lange Schmalseite (21, 58) des Innenwandelements (12a-12i, 14, 14a, 14b, 15, 15a, 15b, 44, 61a-61d) am Randbereich (49a, 49b) der offenen Seite (50a, 50b) in einer Längserstreckung des Hohlprofils über die Aussparung (48a-48d) hervorstehend ausgebildet ist.

4. Einteilungssystem (17) nach einem der vorangegangenen Ansprüche, **dadurch gekennzeichnet, dass** eine Fläche einer ersten, großen Seitenfläche (22, 36, 45) des Innenwandelements (12a-12i, 14, 14a, 14b, 15, 15a, 15b, 44, 61a-61d) vergleichsweise größer ausgestaltet ist, als eine Fläche einer zweiten, großen Seitenfläche des Innenwandelements (12a-12i, 14, 14a, 14b, 15, 15a, 15b, 44, 61a-61d), welche der ersten, großen Seitenfläche (22, 36, 45) gegenüberliegend ausgebildet ist.

5. Einteilungssystem (17) nach dem vorangegangenen Anspruch 4, **dadurch gekennzeichnet, dass** eine Länge der Fläche der zweiten, großen Seitenfläche des Innenwandelements (12a-12i, 14, 14a, 14b, 15, 15a, 15b, 44, 61a-61d) um eine Breite, insbesondere um eine doppelte Breite einer schmalen Seitenfläche des Innenwandelements (12a-12i, 14, 14a, 14b, 15, 15a, 15b, 44, 61a-61d) kürzer ist, als eine Länge der Fläche der ersten, großen Seitenfläche (22, 36, 45) des Innenwandelements (12a-12i, 14, 14a, 14b, 15, 15a, 15b, 44, 61a-61d).

6. Einteilungssystem (17) nach einem der vorangegangenen Ansprüche, **dadurch gekennzeichnet, dass** das Innenwandelement (12a-12i, 14, 14a, 14b, 15, 15a, 15b, 44, 61a-61d) aus Metall ausgebildet ist, insbesondere aus Stahl oder Aluminium.

7. Einteilungssystem (17) einem der vorangegangenen Ansprüche, **dadurch gekennzeichnet, dass** das Verbindungsorgan (16, 16a-16d) für unterschiedliche Einsteckrichtungen unterschiedlich ausgestaltete Einsteckabschnitte (26, 26a, 26b) aufweist.

8. Einteilungssystem (17) einem der vorangegangenen Ansprüche, **dadurch gekennzeichnet, dass** das Verbindungsorgan (16, 16a-16d) ein Dämpfungsorgan (24a-24d, 25, 29) umfasst, welches insbesondere an der Stufe ausgebildet ist.

9. Einteilungssystem (17) einem der vorangegangenen Ansprüche, **dadurch gekennzeichnet, dass** das Verbindungsorgan (16, 16a-16d) ein Dämpfungsorgan (24a-24d, 25, 29) umfasst, wobei das Dämpfungsorgan (24a-24d, 25, 29) ein Distanzhalteelement (24a-24d, 29) umfasst.

10. Einteilungssystem (17) einem der vorangegangenen Ansprüche, **dadurch gekennzeichnet, dass** das Verbindungsorgan (16, 16a- 16d) ein Dämpfungsorgan (24a-24d, 25, 29) umfasst, wobei das Dämpfungsorgan (24a-24d, 25, 29) ein Dämpfungselement (25) umfasst.

11. Einteilungssystem (17) einem der vorangegangenen Ansprüche, **dadurch gekennzeichnet, dass** die Einsteckabschnitte (26, 26a, 26b) des Verbindungsorgans (16, 16a- 16d) beim Zusammenfügen wechselseitig zu einem Innenwandelement (12a-12i, 14, 14a, 14b, 15, 15a, 15b, 44, 61a-61d) zuordenbar ausgestaltet sind.

12. Einteilungssystem (17) nach Anspruch 11, **dadurch gekennzeichnet, dass** das Verbindungsorgan (16, 16a- 16d) derart ausgestaltet ist, dass ein Distanzhalteelement (24a-24d, 29) im angeordneten Zustand des Verbindungsorgans (16, 16a- 16d) in einer Endposition an zwei Innenwandelementen (12a-12i, 14, 14a, 14b, 15, 15a, 15b, 44, 61a-61d) über eine Seitenfläche (22, 36, 45) eines Innenwandelements (12a-12i, 14, 14a, 14b, 15, 15a, 15b, 44, 61a-61d) nach außen übersteht.

13. Einteilungssystem (17) nach Anspruch 11, **dadurch gekennzeichnet, dass** das Verbindungsorgan (16, 16a- 16d) dazu ausgestaltet und derart an zwei Innenwandelemente (12a-12i, 14, 14a, 14b, 15, 15a, 15b, 44, 61a-61d) angeordnet ist, dass die beiden über das Verbindungsorgan (16, 16a-16d) verbundenen Innenwandelemente (12a-12i, 14, 14a, 14b, 15, 15a, 15b, 44, 61a-61d) in, insbesondere genau, zwei unterschiedliche Endpositionen zueinander bringbar sind.

14. Einteilungssystem (17) nach Anspruch 11, **dadurch gekennzeichnet, dass** ein Dämpfungselement (25) des Verbindungsorgans (16, 16a- 16d) im angeordneten Zustand des Verbindungsorgans (16, 16a- 16d) am Innenwandelement (12a-12i, 14, 14a, 14b, 15, 15a, 15b, 44, 61a-61d) in der Endposition über eine große Seitenfläche (22, 36, 45), insbesondere über die erste, große Seitenfläche (22, 36, 45) des Innenwandelements (12a-12i, 14, 14a, 14b, 15, 15a, 15b, 44, 61a-61d) übersteht.

15. Einteilungssystem (17) nach Anspruch 11, **dadurch gekennzeichnet, dass** das Verbindungsorgan (16, 16a- 16d) und Innenwandelemente (12a-12i, 14, 14a, 14b, 15, 15a, 15b, 44, 61a-61d) derart ausgestaltet sind, dass ein Teilbereich einer Außenseite des Verbindungsorgans (16, 16a- 16d) anschließend an eine große Seitenfläche (22, 36, 45) eines ersten Innenwandelements (12a-12i, 14, 14a, 14b, 15, 15a, 15b, 44, 61a-61d) und anschließend an eine große Seitenfläche (22, 36, 45) eines zweiten Innenwandelements (12a-12i, 14, 14a, 14b, 15, 15a, 15b, 44, 61a-61d) vorhanden ist, im angeordneten Zustand des Verbindungsorgans (16, 16a-16d) in einer Endposition an den Innenwandelementen (12a-12i, 14, 14a, 14b, 15, 15a, 15b, 44, 61a-61d).

16. Einteilungssystem (17) nach Anspruch 11, **dadurch gekennzeichnet, dass** zwei insbesondere gleichartige Innenwandelemente (12a-12i, 14, 14a, 14b, 15, 15a, 15b, 44, 61a-61d) mittels eines Verbindungsorgans (16, 16a- 16d) insbesondere fest miteinander verbindbar sind, wobei die Innenwandelemente (12a-12i, 14, 14a, 14b, 15, 15a, 15b, 44, 61a-61d) das Verbindungsorgan (16, 16a- 16d) hierzu in ihrem Inneren (52) aufnehmen.

17. Möbel (1), insbesondere Schublade (5) mit einem Einteilungssystem (17) nach einem der vorangegangenen Ansprüche.

## Claims

1. Divider system (17) for a drawer, having an interior-wall element (12a-12i, 14, 14a, 14b, 15, 15a, 15b, 44, 61a-61d) and having a connecting member (16, 16a-16d), for connecting two of the interior-wall elements (12a-12i, 14, 14a, 14b, 15, 15a, 15b, 44, 61a-61d), and being intended for arranging in an interior space (19, 52) of a drawer (5), wherein the interior-wall element (12a-12i, 14, 14a, 14b, 15, 15a, 15b, 44, 61a-61d) is designed in the form of a hollow profile, wherein the hollow profile has two large side walls, wherein the two large side walls are located opposite one another in the hollow profile, wherein one of the two large side walls comprises a large side surface (22, 36, 45), wherein the hollow profile comprises two narrow side walls, wherein the two narrow side walls are located opposite one another, wherein one of the two narrow side walls comprises a narrow side surface (21, 58), wherein the large side walls and the narrow side walls form exterior walls of the hollow profile and extend along a longitudinal extent of the hollow profile, wherein the two narrow side surfaces and the two large side surfaces surround an open side (50a, 50b) of the hollow profile, wherein on the open side (50a, 50b) of the hollow profile, along an edge region (49a, 49b) of the open side (50a, 50b), the large side surface (22, 36, 45) of the hollow profile has a recess (48a-48d), wherein, the narrow side surface (21, 58) projects beyond the recess (48a-48d), as seen along a longitudinal extent of the hollow profile, **characterized in that**, along the edge region (49a, 49b), the interior-wall element (12a-12i, 14, 14a, 14b, 15, 15a, 15b, 44, 61a-61d) is configured such that the interior-wall element (12a-12i, 14, 14a, 14b, 15, 15a, 15b, 44, 61a-61d) can be connected to a further interior-wall element (12a-12i, 14, 14a, 14b, 15, 15a, 15b, 44, 61a-61d) configured in the same manner on the edge region (49a, 49b) with form-fitting placement along the edge region (49a, 49b), in two different positions, and **in that** the connecting member (16, 16a-16d) has a step (27, 40) along an outer surface and is designed such that it can be arranged so as to engage in a recess (48a-48d) of at least one of the interior-wall elements (12a-12i, 14, 14a, 14b, 15, 15a, 15b, 44, 61a-61d) of the divider system (17).

2. Divider system (17) according to Claim 1, **characterized in that** the interior-wall element (12a-12i, 14, 14a, 14b, 15, 15a, 15b, 44, 61a-61d) is designed in the form of a hollow profile, wherein on an open side (50a, 50b) of the hollow profile, along an edge region (49a, 49b) of the open side (50a, 50b), an upper and/or lower long narrow side (21, 58) of the interior-wall element (12a-12i, 14, 14a, 14b, 15, 15a, 15b, 44, 61a-61d) is of step-like configuration along the edge region (49a, 49b) of the open side (50a, 50b).

3. Divider system (17) according to either of the preceding claims, **characterized in that**, along the edge region (49a, 49b) of the open side (50a, 50b), an upper and/or lower long narrow side (21, 58) of the interior-wall element (12a-12i, 14, 14a, 14b, 15, 15a, 15b, 44, 61a-61d) is designed to project beyond the recess (48a-48d), as seen along a longitudinal extent of the hollow profile.

4. Divider system (17) according to one of the preceding claims, **characterized in that** a surface area of a first, large side surface (22, 36, 45) of the interior-wall element (12a-12i, 14, 14a, 14b, 15, 15a, 15b, 44, 61a-61d) is comparatively larger than a surface area of the second, large side surface of the interior-wall element (12a-12i, 14, 14a, 14b, 15, 15a, 15b, 44, 61a-61d), which is located opposite the first, large side surface (22, 36, 45).

5. Divider system (17) according to preceding Claim 4, **characterized in that** a length of the surface area of the second, large side surface of the interior-wall element (12a-12i, 14, 14a, 14b, 15, 15a, 15b, 44, 61a-61d) is shorter by a single width, in particular by a double width, of a narrow side surface of the interior-wall element (12a-12i, 14, 14a, 14b, 15, 15a, 15b, 44, 61a-61d) than a length of the surface area of the first, large side surface (22, 36, 45) of the interior-wall element (12a-12i, 14, 14a, 14b, 15, 15a, 15b, 44, 61a-61d) .

6. Divider system (17) according to one of the preceding claims, **characterized in that** the interior-wall element (12a-12i, 14, 14a, 14b, 15, 15a, 15b, 44, 61a-61d) is formed from metal, in particular from steel or aluminium.

7. Divider system (17) according to one of the preceding claims, **characterized in that** the connecting member (16, 16a-16d) has differently configured plug-in portions (26, 26a, 26b) for different plug-in directions.

8. Divider system (17) according to one of the preceding claims, **characterized in that** the connecting member (16, 16a-16d) comprises a damping member (24a-24d, 25, 29), which is formed in particular on the step.

9. Divider system (17) according to one of the preceding claims, **characterized in that** the connecting member (16, 16a-16d) comprises a damping member (24a-24d, 25, 29), wherein the damping member (24a-24d, 25, 29) comprises a spacer element (24a-24d, 29).

10. Divider system (17) according to one of the preceding claims, **characterized in that** the connecting member (16, 16a-16d) comprises a damping member (24a-24d, 25, 29), wherein the damping member (24a-24d, 25, 29) comprises a damping element (25).

11. Divider system (17) according to one of the preceding claims, **characterized in that** the plug-in portions (26, 26a, 26b) of the connecting member (16a-16d) are configured such that, during the joining-together operation, they can be assigned alternately to an interior-wall element (12a-12i, 14, 14a, 14b, 15, 15a, 15b, 44, 61a-61d).

12. Divider system (17) according to Claim 11, **characterized in that** the connecting member (16, 16a-16d) is configured such that, when the connecting member (16, 16a-16d) is in the state in which it has been arranged in an end position on two interior-wall elements (12a-12i, 14, 14a, 14b, 15, 15a, 15b, 44, 61a-61d), a spacer element (24a-24d, 29) projects outwards beyond a side surface (22, 36, 45) of an interior-wall element (12a-12i, 14, 14a, 14b, 15, 15a, 15b, 44, 61a-61d).

13. Divider system (17) according to Claim 11, **characterized in that** the connecting member (16, 16a-16d) is configured so that, and is arranged on two interior-wall elements (12a-12i, 14, 14a, 14b, 15, 15a, 15b, 44, 61a-61d) such that, the two interior-wall elements (12a-12i, 14, 14a, 14b, 15, 15a, 15b, 44, 61a-61d) connected via the connecting member (16, 16a-16d) can be moved into, in particular precisely two, different end positions.

14. Divider system (17) according to Claim 11, **characterized in that**, when the connecting member (16, 16a-16d) is in the state in which it has been arranged in the end position on the interior-wall element (12a-12i, 14, 14a, 14b, 15, 15a, 15b, 44, 61a-61d), a damping element (25) of the connecting member (16, 16a-16d) projects beyond a large side surface (22, 36, 45), in particular beyond the first, large side surface (22, 36, 45) of the interior-wall element (12a-12i, 14, 14a, 14b, 15, 15a, 15b, 44, 61a-61d).

15. Divider system (17) according to Claim 11, **characterized in that** the connecting member (16, 16a-16d) and interior-wall elements (12a-12i, 14, 14a, 14b, 15, 15a, 15b, 44, 61a-61d) are configured such that, when the connecting member (16, 16a-16d) is in the state in which it has been arranged in an end position on the interior-wall elements (12a-12i, 14, 14a, 14b, 15, 15a, 15b, 44, 61a-61d), a sub-region of an outer side of the connecting member (16, 16a-16d) adjoins a large side surface (22, 36, 45) of a first interior-wall element (12a-12i, 14, 14a, 14b, 15, 15a, 15b, 44, 61a-61d) and adjoins a large side surface (22, 36, 45) of a second interior-wall element (12a-12i, 14, 14a, 14b, 15, 15a, 15b, 44, 61a-61d) .

16. Divider system (17) according to Claim 11, **characterized in that** two, in particular identical interior-wall elements (12a-12i, 14, 14a, 14b, 15, 15a, 15b, 44, 61a-61d) can be connected to one another in particular in a fixed manner by means of a connecting member (16, 16a-16d), wherein, for this purpose, the interior-wall elements (12a-12i, 14, 14a, 14b, 15, 15a, 15b, 44, 61a-61d) accommodate the connecting member (16, 16a-16d) in their interior (52).

17. Piece of furniture (1), in particular a drawer (5) having a divider system (17) according to one of the preceding claims.

## Revendications

1. Système de division (17) pour un tiroir, muni d'un élément paroi intérieure (12a-12i, 14, 14a, 14b, 15, 15a, 15b, 44, 61a-61d) et muni d'un organe de liaison (16, 16a-16d) pour la liaison de deux des éléments paroi intérieure (12a-12i, 14, 14a, 14b, 15, 15a, 15b, 44, 61a-61d), destiné à être agencé dans un espace intérieur (19, 52) d'un tiroir (5), l'élément paroi intérieure (12a-12i, 14, 14a, 14b, 15, 15a, 15b, 44, 61a-61d) étant configuré en tant que profilé creux, le profilé creux possédant deux grandes parois latérales, les deux grandes parois latérales se présentant en vis-à-vis sur le profilé creux, une des deux grandes parois latérales comportant une grande surface latérale (22, 36, 45), le profilé creux comportant deux petites parois latérales, les deux petites parois latérales étant configurées en vis-à-vis, une des deux petites parois latérales comportant une petite surface latérale (21, 58), les grandes parois latérales et les petites parois latérales formant des parois extérieures du profilé creux et s'étendant le long d'une étendue longitudinale du profilé creux, les deux petites surfaces latérales et les deux grandes surfaces latérales bordant un côté ouvert (50a, 50b) du profilé creux, la grande surface latérale (22, 36, 45) du profilé creux comprenant un évidement (48a-48d) sur le côté ouvert (50a, 50b) du profilé creux le long d'une zone de bord (49a, 49b) du côté ouvert (50a, 50b), la petite surface latérale (21, 58) dépassant au-dessus de l'évidement (48a-48d) dans une étendue longitudinale du profilé creux,
**caractérisé en ce que**
l'élément paroi intérieure (12a-12i, 14, 14a, 14b, 15, 15a, 15b, 44, 61a-61d) est conçu au niveau de la zone de bord (49a, 49b) de telle sorte que l'élément paroi intérieure (12a-12i, 14, 14a, 14b, 15, 15a, 15b, 44, 61a-61d) puisse être relié à un élément paroi intérieure (12a-12i, 14, 14a, 14b, 15, 15a, 15b, 44, 61a-61d) supplémentaire configuré de manière identique au niveau de la zone de bord (49a, 49b) dans deux positions différentes l'une de l'autre par accouplement de forme au niveau de la zone de bord (49a, 49b), et **en ce que** l'organe de liaison (16, 16a-16d) comprend un gradin (27, 40) sur une surface extérieure et est configuré de telle sorte qu'il puisse être agencé en engagement dans un évidement (48a-48d) d'au moins un des éléments paroi intérieure (12a-12i, 14, 14a, 14b, 15, 15a, 15b, 44, 61a-61d) du système de division (17).

2. Système de division (17) selon la revendication 1, **caractérisé en ce que** l'élément paroi intérieure (12a-12i, 14, 14a, 14b, 15, 15a, 15b, 44, 61a-61d) est configuré en tant que profilé creux, un petit côté long supérieur et/ou inférieur (21, 58) de l'élément paroi intérieure (12a-12i, 14, 14a, 14b, 15, 15a, 15b, 44, 61a-61d) au niveau de la zone de bord (49a, 49b) du côté ouvert (50a, 50b) étant conçu sous forme de gradin au niveau d'un côté ouvert (50a, 50b) du profilé creux le long d'une zone de bord (49a, 49b) du côté ouvert (50a, 50b).

3. Système de division (17) selon l'une quelconque des revendications précédentes, **caractérisé en ce qu'**un petit côté long supérieur et/ou inférieur (21, 58) de l'élément paroi intérieure (12a-12i, 14, 14a, 14b, 15, 15a, 15b, 44, 61a-61d) est configuré pour faire saillie au-dessus de l'évidement (48a-48d) au niveau de la zone de bord (49a, 49b) du côté ouvert (50a, 50b) dans une étendue longitudinale du profilé creux.

4. Système de division (17) selon l'une quelconque des revendications précédentes, **caractérisé en ce qu'**une surface d'une première grande surface latérale (22, 36, 45) de l'élément paroi intérieure (12a-12i, 14, 14a, 14b, 15, 15a, 15b, 44, 61a-61d) est conçue comparativement plus grande qu'une surface d'une deuxième grande surface latérale de l'élément paroi intérieure (12a-12i, 14, 14a, 14b, 15, 15a, 15b, 44, 61a-61d), qui est configurée en vis-à-vis de la première grande surface latérale (22, 36, 45).

5. Système de division (17) selon la revendication 4 précédente, **caractérisé en ce qu'**une longueur de la surface de la deuxième grande surface latérale de l'élément paroi intérieure (12a-12i, 14, 14a, 14b, 15, 15a, 15b, 44, 61a-61d) est plus courte d'une largeur, notamment du double de la largeur d'une petite surface latérale de l'élément paroi intérieure (12a-12i, 14, 14a, 14b, 15, 15a, 15b, 44, 61a-61d), qu'une longueur de la surface de la première grande surface latérale (22, 36, 45) de l'élément paroi intérieure (12a-12i, 14, 14a, 14b, 15, 15a, 15b, 44, 61a-61d).

6. Système de division (17) selon l'une quelconque des revendications précédentes, **caractérisé en ce que** l'élément paroi intérieure (12a-12i, 14, 14a, 14b, 15, 15a, 15b, 44, 61a-61d) est configuré en métal, notamment en acier ou aluminium.

7. Système de division (17) selon l'une quelconque des revendications précédentes, **caractérisé en ce que** l'organe de liaison (16, 16a-16d) comprend des sections d'enfichage (26, 26a, 26b) conçues différemment pour différentes directions d'enfichage.

8. Système de division (17) selon l'une quelconque des revendications précédentes, **caractérisé en ce que** l'organe de liaison (16, 16a-16d) comporte un organe d'amortissement (24a-24d, 25, 29), qui est notamment formé au niveau du gradin.

9. Système de division (17) selon l'une quelconque des revendications précédentes, **caractérisé en ce que** l'organe de liaison (16, 16a-16d) comporte un organe d'amortissement (24a-24d, 25, 29), l'organe d'amortissement (24a-24d, 25, 29) comportant un élément espaceur (24a-24d, 29).

10. Système de division (17) selon l'une quelconque des revendications précédentes, **caractérisé en ce que** l'organe de liaison (16, 16a-16d) comporte un organe d'amortissement (24a-24d, 25, 29), l'organe d'amortissement (24a-24d, 25, 29) comportant un élément d'amortissement (25).

11. Système de division (17) selon l'une quelconque des revendications précédentes, **caractérisé en ce que** les sections d'enfichage (26, 26a, 26b) de l'organe de liaison (16, 16a-16d) sont conçues de manière à pouvoir être associées mutuellement à un élément paroi intérieure (12a-12i, 14, 14a, 14b, 15, 15a, 15b, 44, 61a-61d) lors de l'assemblage.

12. Système de division (17) selon la revendication 11, **caractérisé en ce que** l'organe de liaison (16, 16a-16d) est conçu de telle sorte qu'un élément espaceur (24a-24d, 29) dépasse dans l'état agencé de l'organe de liaison (16, 16a-16d) dans une position d'extrémité au niveau de deux éléments paroi intérieure (12a-12i, 14, 14a, 14b, 15, 15a, 15b, 44, 61a-61d) au-dessus d'une surface latérale (22, 36, 45) d'un élément paroi intérieure (12a-12i, 14, 14a, 14b, 15, 15a, 15b, 44, 61a-61d) vers l'extérieur.

13. Système de division (17) selon la revendication 11, **caractérisé en ce que** l'organe de liaison (16, 16a-16d) est conçu et est agencé sur deux éléments paroi intérieure (12a-12i, 14, 14a, 14b, 15, 15a, 15b, 44, 61a-61d) de telle manière que les deux éléments paroi intérieure (12a-12i, 14, 14a, 14b, 15, 15a, 15b, 44, 61a-61d) reliés par l'intermédiaire de l'organe de liaison (16, 16a-16d) puissent être amenés dans, notamment exactement, deux positions d'extrémité différentes l'un par rapport à l'autre.

14. Système de division (17) selon la revendication 11, **caractérisé en ce qu'**un élément d'amortissement (25) de l'organe de liaison (16, 16a-16d) dépasse dans l'état agencé de l'organe de liaison (16, 16a-16d) sur l'élément paroi intérieure (12a-12i, 14, 14a, 14b, 15, 15a, 15b, 44, 61a-61d) dans la position d'extrémité au-dessus d'une grande surface latérale (22, 36, 45), notamment au-dessus de la première grande surface latérale (22, 36, 45) de l'élément paroi intérieure (12a-12i, 14, 14a, 14b, 15, 15a, 15b, 44, 61a-61d).

15. Système de division (17) selon la revendication 11, **caractérisé en ce que** l'organe de liaison (16, 16a-16d) et les éléments paroi intérieure (12a-12i, 14, 14a, 14b, 15, 15a, 15b, 44, 61a-61d) sont conçus de telle sorte qu'une zone partielle d'un côté extérieur de l'organe de liaison (16, 16a-16d) soit contiguë à une grande surface latérale (22, 36, 45) d'un premier élément paroi intérieure (12a-12i, 14, 14a, 14b, 15, 15a, 15b, 44, 61a-61d) et contiguë à une grande surface latérale (22, 36, 45) d'un deuxième élément paroi intérieure (12a-12i, 14, 14a, 14b, 15, 15a, 15b, 44, 61a-61d), dans l'état agencé de l'organe de liaison (16, 16a-16d) dans une position d'extrémité au niveau des éléments paroi intérieure (12a-12i, 14, 14a, 14b, 15, 15a, 15b, 44, 61a-61d).

16. Système de division (17) selon la revendication 11, **caractérisé en ce que** deux éléments paroi intérieure (12a-12i, 14, 14a, 14b, 15, 15a, 15b, 44, 61a-61d), notamment de même type, peuvent être reliés l'un à l'autre au moyen d'un organe de liaison (16, 16a-16d), notamment de manière fixe, les éléments paroi intérieure (12a-12i, 14, 14a, 14b, 15, 15a, 15b, 44, 61a-61d) recevant pour cela l'organe de liaison (16, 16a-16d) dans leur intérieur (52).

17. Meuble (1), notamment tiroir (5) muni d'un système de division (17) selon l'une quelconque des revendications précédentes.
